# EUROPEAN PATENT APPLICATION

(11) **EP 4 628 603 A1**
(43) Date of publication of application: **08.10.2025**
(21) Application number: 23897978.5
(22) Date of filing: 21.07.2023
(51) Int. Cl.: C21D 8/02, C21D 9/46, B21C 47/02, C22C 38/02, C22C 38/04, C22C 38/16, C22C 38/00, C23C 22/07

(54) **HOT ROLLED STEEL SHEET, PART FOR VEHICLE, AND METHOD FOR MANUFACTURING SAME**

(30) Priority: 01.12.2022 KR 20220165936
(71) Applicant: Hyundai Steel Company, Incheon 22525 (KR)
(72) Inventor: KANG, Dong Hoon, Incheon 22525 (KR); HWANG, Sung Doo, Incheon 22525 (KR); KWON, Sun Hwan, Incheon 22525 (KR); LEE, Su Min, Incheon 22525 (KR)
(74) Representative: Viering, Jentschura & Partner mbB Patent- und Rechtsanwälte
(86) International application number: PCT/KR2023/010568
(87) International publication number: WO 2024/117442

(57) **Abstract**

A method of producing a hot-rolled steel sheet according to an embodiment of the present invention includes producing molten metal using raw materials including pig iron produced in a blast furnace, direct reduced iron, and steel scrap, producing a semi-finished product, and producing a hot-rolled steel sheet.

## Description

### CROSS-REFERENCE TO RELATED APPLICATION

This application claims priority to and the benefit of Korean Patent Application No. 2022-0165936, filed on December 1, 2022, the disclosure of which is incorporated herein by reference in its entirety.

### BACKGROUND

### 1. Field of the Invention

The present invention relates to a hot-rolled steel sheet, an automotive part, and a method of producing the same.

### 2. Discussion of Related Art

Generally, steelmaking methods include a blast furnace-converter process and an electric arc furnace (EAF) process.

The blast furnace-converter process involves producing pig iron by charging iron ore and bituminous coal (such as coke) into a blast furnace and melting them with hot air, and then producing molten steel by charging the pig iron produced in the blast furnace into a converter and removing impurities such as carbon, etc.

The EAF process involves producing molten steel by melting steel scrap in an EAF.

The molten steel produced by the above-described two methods is made into semi-finished products through continuous casting, and the semi-finished products are made into final products having dimensions suitable for customer needs through subsequent rolling.

Meanwhile, recently, the rapid climate change caused by greenhouse gas emissions in various industries has become a major international issue.

Carbon dioxide is a representative greenhouse gas. Among various industries, the steel industry is known as one of the industries with the highest proportion of carbon dioxide emissions.

For example, the blast furnace-converter process emits a large amount of carbon dioxide by using carbon monoxide (CO) produced by the combustion of coke as a reducing agent.

Accordingly, major steel companies are focusing on developing an EAF process that emits a relatively small amount of carbon dioxide compared to the blast furnace-converter process.

However, EAF steel products using steel scrap as the main raw material have the problem of containing a large amount of tramp elements. Tramp elements refer to impure alloy elements present in trace amounts in steel products.

Specifically, tramp elements are not easily dissolved in a base material, i.e., iron, and tend to accumulate at grain boundaries. Consequently, when the tramp element content exceeds permissible limits, cracks may be formed on the surface and inside during rolling. In addition, tramp elements may act as a major factor for hot embrittlement, significantly reducing ductility at high temperatures.

Therefore, EAF products generally have a limitation in application in high-grade steel such as automotive steel sheets that require high surface quality.

### SUMMARY OF THE INVENTION

The present invention is directed to providing a hot-rolled steel sheet, an automotive part, and a method of producing the same, which are capable of reducing the amount of carbon dioxide generated in a blast furnace-converter process.

The present invention is also directed to providing a hot-rolled steel sheet, an automotive part, and a method of producing the same, which use an electric arc furnace and exhibit significantly superior physical properties compared to conventional electric arc furnace products.

The present invention is also directed to providing a hot-rolled steel sheet, an automotive part, and a method of producing the same, which have flexibility in raw material selection by minimizing the impact of fluctuations in the supply of specific raw materials.

The objectives of the present invention are not limited to those described above, and other objectives not mentioned can be clearly understood by those skilled in the art from the description below.

A method of producing a hot-rolled steel sheet according to an aspect of the present invention includes producing molten metal using raw materials including pig iron produced in a blast furnace, direct reduced iron, and steel scrap, producing a semi-finished product, and producing a hot-rolled steel sheet. The cross-sectional microstructure of the hot-rolled steel sheet includes 15% or less of a martensite microstructure and the remainder as a bainite microstructure.

According to an embodiment of the present invention, the step of producing a hot-rolled steel sheet may include reheating at a reheating temperature of 1150 °C to 1350 °C, hot rolling at a finishing delivery temperature of 880 °C to 930 °C, cooling at a cooling rate of 60 °C/sec to 110 °C/sec, and winding at a winding temperature of 380 °C to 480 °C.

According to an embodiment of the present invention, the content of pig iron may be 20 wt% to 60 wt%.

According to an embodiment of the present invention, the content of direct reduced iron may be 10 wt% to 40 wt%.

According to an embodiment of the present invention, the content of steel scrap may be 20 to 60 wt%.

According to an embodiment of the present invention, the hot-rolled steel sheet may include 0.07 wt% to 0.12 wt% of carbon.

According to an embodiment of the present invention, the step of producing molten metal may include charging the raw materials into an electric arc furnace and melting the raw materials in the electric arc furnace.

A hot-rolled steel sheet according to another aspect of the present invention includes, in % by weight, 0.07 to 0.12% of carbon, 0.3 to 0.8% of silicon, 1.5 to 2.0% of manganese, 0.02% or less of phosphorus, 0.005% or less of sulfur, 0.12% or less of copper (excluding 0), 0.012% or less of tin (excluding 0), and the remainder as iron (Fe) and unavoidable impurities. The hot-rolled steel sheet is produced by melting pig iron produced in a blast furnace, direct reduced iron, and steel scrap, and the cross-sectional microstructure of the hot-rolled steel sheet includes 15% or less of a martensite microstructure and the remainder as a bainite microstructure.

According to an embodiment of the present invention, the content of pig iron may be 20 wt% to 60 wt%.

According to an embodiment of the present invention, the content of direct reduced iron may be 10 wt% to 40 wt%.

According to an embodiment of the present invention, the content of steel scrap may be 20 to 60 wt%.

According to an embodiment of the present invention, the hot-rolled steel sheet may satisfy a coating weight of 1.8 to 3.0 g/m² and a crystal particle size of 2 to 10 µm when observing the surface after phosphate coating treatment.

According to an embodiment of the present invention, the hot-rolled steel sheet may further include one or more elements of chromium (Cr), niobium (Nb), titanium (Ti), and boron (B).

An automotive part according to still another aspect of the present invention includes, in % by weight, 0.07 to 0.12% of carbon, 0.3 to 0.8% of silicon, 1.5 to 2.0% of manganese, 0.02% or less of phosphorus, 0.005% or less of sulfur, 0.12% or less of copper (excluding 0), 0.012% or less of tin (excluding 0), and the remainder as iron (Fe) and unavoidable impurities. Here, a base material of the automotive part is produced by melting pig iron produced in a blast furnace, direct reduced iron, and steel scrap, and the cross-sectional microstructure of the base material includes 15% or less of a martensite microstructure and the remainder as a bainite microstructure.

According to an embodiment of the present invention, the pig iron content may be 20 wt% to 60 wt%, the direct reduced iron content may be 10 wt% to 40 wt%, and the steel scrap content may be 20 wt% to 60 wt%.

According to an embodiment of the present invention, the automotive part may satisfy a coating weight of 1.8 to 3.0 g/m² and a crystal particle size of 2 to 10 µm when observing the surface after phosphate coating treatment.

According to an embodiment of the present invention, the automotive part may further include one or more elements of chromium (Cr), niobium (Nb), titanium (Ti), and boron (B).

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a flowchart showing a method of producing a hot-rolled steel sheet according to an embodiment of the present invention;
FIG. 2 is a flowchart showing in detail the step of producing molten metal in the flowchart of FIG. 1;
FIG. 3 is a set of photographs of the microstructure of hot-rolled steel sheets according to Example 6 and Comparative Example 1 described in Table 2;
FIG. 4 is a set of photographs of the surfaces of hot-rolled steel sheets according to Example 6 and Comparative Example 1 described in Table 3; and
FIG. 5 shows a photograph of an automotive part manufactured using the hot-rolled steel sheet according to Example 6 described in Table 4.

### DETAILED DESCRIPTION OF EXEMPLARY EMBODIMENTS

All terms (including technical and scientific terms) used herein have the same meaning as generally understood by those skilled in the art to which the present invention pertains.

Terms that are defined in commonly used dictionaries should be interpreted as having meanings consistent with the context of the relevant technology, and are explicitly defined herein unless they are interpreted in an idealized or overly formal sense.

Terms such as "first," "second," and "third" are used to describe various components, regions, portions, or layers, which are not limited by these terms. These terms are used solely for the purpose of distinguishing one component, region, portion, or layer from another.

In this specification, when a part is said to be "on" another part, it is not limited to the case in which it is directly on the other part, but also includes the case in which another part is present therebetween.

In this specification, the inclusion of additional elements means that the additional element is included in place of the remaining iron (Fe), and unless specifically stated, % refers to wt%.

Hereinafter, embodiments of the present invention will be described in detail with reference to the drawings.

### Components of hot-rolled steel sheet according to embodiment of the present invention

A hot-rolled steel sheet according to an embodiment of the present invention includes iron (Fe), carbon (C), silicon (Si), manganese (Mn), phosphorus (P), sulfur (S), copper (Cu), and tin (Sn).

The hot-rolled steel sheet according to an embodiment of the present invention may further include one or more of aluminum (Al), chromium (Cr), niobium (Nb), titanium (Ti), boron (B), and nitrogen (N).

For example, the hot-rolled steel sheet according to an embodiment may include, in % by weight, 0.07 to 0.12 of carbon (C), 0.3 to 0.8 of silicon (Si), 1.5 to 2.0 of manganese (Mn), 0.02 or less of phosphorus (P), 0.005 or less of sulfur (S), 0.2 to 0.5 of aluminum (Al), less than 0.1 of copper (Cu) (excluding 0), less than 0.01 of tin (Sn) (excluding 0), 0.5 to 1.1 of chromium (Cr), 0.05 to 0.1 of niobium (Nb), 0.06 to 1.1 of titanium (Ti), 0.001 to 0.0035 of boron (B), 0.006 or less of nitrogen (N), and the remainder as iron (Fe) and other unavoidable impurities.

Hereinafter, the components and component contents of the hot-rolled steel sheet will be described.

### [Carbon (C): 0.07 wt% or more and 0.12 wt% or less]

Carbon (C) is an essential element for securing the required strength. For example, carbon (C) may be added to secure martensite and bainite microstructures. Also, carbon (C) may be added to secure the balance of precipitates.

However, when the amount of carbon (C) added is excessive, the processability and weldability of the steel sheet may be degraded. On the other hand, when the amount of carbon (C) added is insufficient, the above-described addition effect may be insignificant.

In the present embodiment, the carbon content is controlled so that the microstructure of the hot-rolled steel sheet includes 20% or less of a martensite microstructure and the remainder as a bainite microstructure, and preferably 15% or less of the martensite microstructure and the remainder as the bainite microstructure.

This approach enables the production of hot-rolled steel sheets that simultaneously achieve high strength and excellent processability. In an embodiment of the present invention, the content of carbon (C) may be 0.07 wt% to 0.12 wt%, and preferably, 0.09 wt% to 0.10 wt%.

According to an embodiment of the present invention, the content of carbon (C) may be about 0.07 wt% to 0.12 wt%, and preferably, about 0.09 wt% to 0.10 wt%.

### [Silicon (Si): 0.3 wt% or more and 0.8 wt% or less]

Silicon (Si) is a solid solution strengthening element. For example, silicon (Si) is a ferrite stabilizing element that is dissolved in ferrite, and can increase strength without deteriorating ductility. Silicon (Si) can improve the elongation of the steel sheet by suppressing the formation of carbides.

However, when the amount of silicon (Si) added is excessive, surface defects caused by oxide scale may occur on the surface of the hot-rolled steel sheet, and weldability may be degraded. On the other hand, when the amount of silicon (Si) added is insufficient, the above-described addition effect may be insignificant.

Therefore, in an embodiment of the present invention, the content of silicon may be 0.3 wt% to 0.8 wt%. According to an embodiment of the present invention, the content of silicon may be about 0.3 wt% to 0.8 wt%.

### [Manganese (Mn): 1.5 wt% or more and 2.0 wt% or less]

Manganese improves the strength of steel by improving solid solution strengthening and hardenability. Manganese is an essential component for suppressing perlite transformation and obtaining a bainite microstructure.

However, when the amount of manganese (Mn) added is excessive, processability may deteriorate, and weldability may be degraded. On the other hand, when the amount of manganese (Mn) added is insufficient, the above-described addition effect may be insignificant.

Therefore, in an embodiment of the present invention, the content of manganese (Mn) may be 1.5 wt% to 2.0 wt%. According to an embodiment of the present invention, the content of manganese (Mn) may be about 1.5 wt% to 2.0 wt%.

### [Sulfur (S): 0.005 wt% or less]

Sulfur (S) may degrade toughness and weldability and increase non-metallic inclusions (sulfur compounds) during hot rolling, thereby degrading the processability of steel. Therefore, in an embodiment of the present invention, the content of sulfur (S) may be 0.005 wt% or less. According to an embodiment of the present invention, the content of sulfur (S) may be about 0.005 wt% or less.

### [Phosphorus (P): 0.02 wt% or less]

Phosphorus (P) is an impure element that promotes grain boundary segregation and high-temperature cracking. Therefore, in an embodiment of the present invention, the content of phosphorus (P) may be 0.02 wt% or less. According to an embodiment of the present invention, the content of phosphorus (P) may be about 0.02 wt% or less.

### [Aluminum (Al): 0.02 wt% or more and 0.5 wt% or less]

Aluminum (Al) is a representative deoxidizer. Aluminum (Al) is input into a converter before or during tapping to suppress the generation of pinholes or non-metallic inclusions. Aluminum (Al) combines with nitrogen in steel to form a nitride (AlN).

The nitride AlN is effective in grain refinement of steel by being precipitated at the grain boundary, and thus can improve the toughness of steel.

In addition, AlN may prevent cracks during slab production by effectively preventing high-temperature oxidation.

However, when the amount of aluminum (Al) added is excessive, defects may occur due to the formation of inclusions. On the other hand, when the amount of aluminum (Al) added is insufficient, the above-described addition effect may be insignificant.

Therefore, in an embodiment of the present invention, the content of aluminum (Al) may be 0.02 wt% to 0.5 wt%. According to an embodiment of the present invention, the content of aluminum (Al) may be about 0.02 wt% to 0.5 wt%.

### [Copper (Cu): 0.12 wt% or less (excluding 0) / tin (Sn): 0.012 wt% or less (excluding 0)]

Copper (Cu) and tin (Sn) may be incorporated from steel scrap. Copper (Cu) and tin (Sn) are elements that are hardly removed in the steelmaking process, and are considered tramp elements. The tramp element may cause surface and internal cracks during rolling. In addition, tramp elements may act as a major factor for hot embrittlement, thereby significantly reducing ductility at high temperatures.

Particularly, when a phosphate coating is formed on the steel, tin (Sn) degrades the size uniformity and stable adhesion amount of phosphate.

Therefore, in an embodiment of the present invention, the contents of copper (Cu) and tin (Sn) may be 0.12 wt% or less (excluding 0) and 0.012 wt% or less (excluding 0), respectively. According to an embodiment of the present invention, the contents of copper (Cu) and tin (Sn) may be about 0.12 wt% or less (excluding 0) and about 0.012 wt% or less (excluding 0), respectively.

### [Chromium (Cr): 0.5 wt% or more and 1.1 wt% or less]

Chromium (Cr) is a solid solution strengthening element. Chromium (Cr) may help form martensite and bainite by delaying ferrite transformation.

However, when the amount of chromium (Cr) added is excessive, a microstructure is not uniform, and thus processability may be degraded. On the other hand, when the amount of chromium (Cr) added is insufficient, the above-described addition effect may be insignificant.

Therefore, in an embodiment of the present invention, the content of chromium (Cr) may be 0.5 wt% to 1.1 wt%. According to an embodiment of the present invention, the content of chromium (Cr) may be about 0.5 wt% to 1.1 wt%.

### [Niobium (Nb): 0.05 wt% or more and 0.1 wt% or less]

Niobium (Nb) is effective in improving strength and impact toughness by refining grains.

However, when the amount of niobium (Nb) added is excessive, recrystallization is excessively delayed, and thus precipitates may become coarse, thereby degrading processability. On the other hand, when the amount of niobium (Nb) added is insufficient, the above-described addition effect may be insignificant.

Therefore, in an embodiment of the present invention, the content of niobium (Nb) may be 0.05 wt% to 0.1 wt%. According to an embodiment of the present invention, the content of niobium (Nb) may be about 0.05 wt% to 0.1 wt%.

### [Titanium (Ti): 0.06 wt% or more and 1.1 wt% or less]

Titanium (Ti) combines with nitrogen in steel to form a nitride (TiN), and thus may suppress the growth of grains and the production of free nitrogen. However, when the amount of titanium (Ti) added is excessive, precipitates are excessively formed, and thus impact toughness may be degraded. On the other hand, when the amount of titanium (Ti) added is insufficient, the above-described addition effect may be insignificant.

Therefore, in an embodiment of the present invention, the content of titanium (Ti) may be 0.06 wt% to 1.1 wt%. According to an embodiment of the present invention, the content of titanium (Ti) may be about 0.06 wt% to 1.1 wt%.

### [Boron (B): 0.001 wt% or more and 0.0035 wt% or less]

Boron (B) improves strength by suppressing ferrite transformation. However, when the amount of boron (B) added is excessive, weldability and processability may be degraded. On the other hand, when the amount of boron (B) added is insufficient, the above-described addition effect may be insignificant.

Therefore, in an embodiment of the present invention, the content of boron (B) may be 0.001 wt% to 0.0035 wt%. According to an embodiment of the present invention, the content of boron (B) may be about 0.001 wt% to 0.0035 wt%.

### [Nitrogen (N): 0.006 wt% or less]

Nitrogen (N) may greatly affect the mechanical properties of steel even with a trace amount. For example, nitrogen (N) may degrade elongation while increasing tensile strength and yield strength. Also, free nitrogen may cause strain aging.

Therefore, in an embodiment of the present invention, the content of nitrogen (N) may be 0.006 wt% or less. According to an embodiment of the present invention, the content of nitrogen (N) may be about 0.006 wt% or less.

The remainder includes iron (Fe) and unavoidable impurities. Unavoidable impurities are impurities incorporated in the process of producing a hot-rolled steel sheet, and since they are widely known in the field, a detailed description is omitted.

In an embodiment of the present invention, the addition of elements other than the above-described alloy components is not excluded, and various elements may be included without departing from the technical spirit of the present invention. When an additional element is included, it replaces the remaining Fe.

As described above, the components and component contents of the steel sheet according to an embodiment have been examined. In addition to the embodiments described above, it will be apparent to those skilled in the art that the present invention may be embodied in other specific forms without departing from the spirit or scope of the present invention.

### Method of producing hot-rolled steel sheet

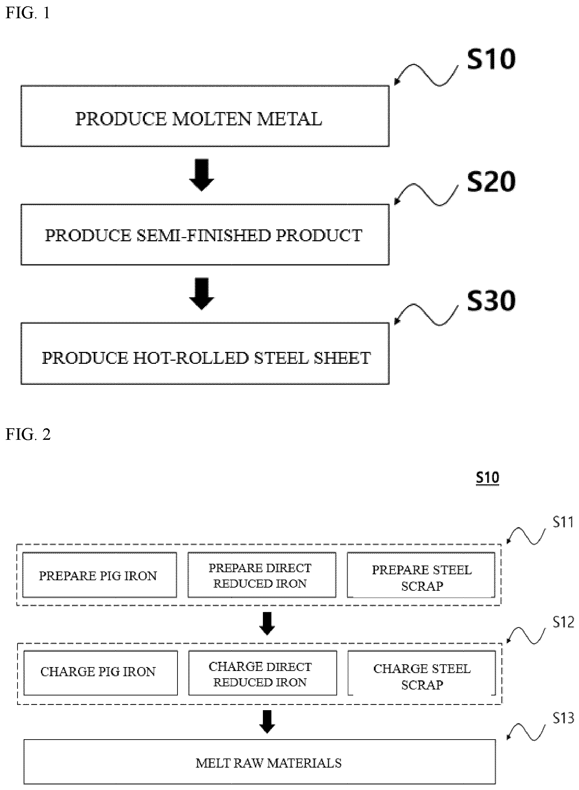

FIG. 1 is a flowchart showing a method of producing steel according to an embodiment of the present invention.

Referring to FIG. 1, the method of producing steel includes producing molten metal (S10), producing a semi-finished product (S20), and producing a hot-rolled steel sheet (S30).

The step of producing molten metal (S10) is for melting raw materials to produce molten steel. The raw materials may include an ore-based material and steel scrap.

The ore-based material may include pig iron and direct reduced iron. Pig iron may be produced by charging iron ore and coke into a blast furnace and blowing hot air to reduce and melt the iron ore.

Direct reduced iron may be produced by reducing solid-phase iron ore using reducing gases (carbon monoxide, hydrogen, etc.). For example, the direct reduced iron may be direct reduced iron (DRI) or hot briquetted iron (HBI). The direct reduced iron may be processed into a pellet form.

However, the type and processed form of direct reduced iron are not limited to those described above.

Steel scrap may be obtained from a steelmaking process or unusable steel products.

Meanwhile, pig iron is suitable for producing high-quality steel products because it has a small content of impurities, but there is a problem in that a large amount of carbon dioxide is emitted during the process of producing pig iron. For example, the amount of carbon dioxide emitted when producing one ton of pig iron is about two tons.

Electric arc furnace (EAF) molten steel is produced by melting steel scrap in an EAF. In the process of producing EAF molten steel, a smaller amount of carbon dioxide is emitted compared to a blast furnace process. For example, the emission amount of carbon dioxide from producing molten steel is one fourth of that from producing pig iron.

However, since steel products produced from EAF molten steel have a large content of impurities such as tramp elements, it is difficult to satisfy physical properties that high-quality steel products such as automotive parts require.

In order to solve the above-described problem, the step of producing molten metal (S10) according to an embodiment of the present invention is performed by charging ore-based materials, such as pig iron and direct reduced iron, and steel scrap into an electric arc furnace and melting them.

FIG. 2 is a flowchart showing in detail the step of producing molten metal in the flowchart of FIG. 1.

Referring to FIG. 2, the step of producing molten metal (S10) may include preparing raw materials (S11), charging the raw materials (S12), and melting the raw materials (S13).

In the step of preparing raw materials (S11), pig iron, direct reduced iron, and steel scrap are prepared according to a predetermined content ratio.

According to an embodiment of the present invention, the carbon content of the pig iron may be higher than that of other raw materials. The carbon content of the pig iron may be 2 wt% or more, and more specifically, 4 wt% or more.

In an embodiment of the present invention, the carbon content of the pig iron may be about 2 wt% or more, and more specifically, about 4 wt% or more.

For example, in the present embodiment, the carbon content of the pig iron is 4.7 wt%.

The tramp element content of the pig iron may be lower than that of other raw materials. For example, in the present embodiment, the copper content of the pig iron may be 0.03 wt% or less. In the present embodiment, the tin content of the pig iron may be 0.003 wt% or less.

According to an embodiment of the present invention, the copper content of the pig iron may be about 0.03 wt% or less. For example, in the present embodiment, the tin content of the pig iron may be about 0.003 wt% or less.

According to an embodiment of the present invention, when the content of pig iron exceeds the preset range in the mixture of pig iron, direct reduced iron, and steel scrap, the effect of reducing carbon dioxide emissions may diminish as the pig iron content increases.

On the other hand, when the pig iron content is below the preset range, insufficient heat sources may hinder the proper melting of other raw materials (i.e., steel scrap and direct reduced iron).

Accordingly, in an embodiment of the present invention, the content of the pig iron may be 20 wt% to 60 wt%. According to an embodiment of the present invention, the content of the pig iron may be about 20 wt% to 60 wt%.

According to an embodiment of the present invention, the carbon content of the direct reduced iron may be 2 wt% or more, and more specifically, 4 wt% or more. In an embodiment of the present invention, the carbon content of the direct reduced iron may be about 2 wt% or more, and more specifically, about 4 wt% or more.

For example, in the present invention, the carbon content of the direct reduced iron may be 4.3 wt%.

According to an embodiment of the present invention, the copper content of the direct reduced iron may be 0.02 wt% or less. The tin content of the direct reduced iron may be 0.002 wt% or less.

In an embodiment of the present invention, the copper content of the direct reduced iron may be about 0.02 wt% or less. The tin content of the direct reduced iron may be about 0.002 wt% or less.

According to an embodiment of the present invention, when the direct reduced iron content exceeds the preset range, the increased slag volume in the molten metal necessitates higher operating temperatures in the electric arc furnace, thereby reducing energy efficiency. This leads to reduced refining capacity, requiring additional adjustments to slag making during the dephosphorization process.

On the other hand, when the direct reduced iron content is below the preset range, the content of pig iron or steel scrap needs to be increased to maintain compositional balance.

For example, when the pig iron content is increased to compensate for decreased direct reduced iron content, the effect of reducing carbon dioxide emissions may be insufficient. When the steel scrap content is increased to compensate for decreased direct reduced iron content, the content of tramp elements (i.e., copper and tin) may increase.

Therefore, in an embodiment of the present invention, the content of the direct reduced iron may be 10 wt% to 40 wt%. According to an embodiment of the present invention, the content of the direct reduced iron may be about 10 wt% to 40 wt%.

According to an embodiment of the present invention, the carbon content of the steel scrap may be 0.45 wt% or less. In an embodiment of the present invention, the carbon content of the steel scrap may be about 0.45 wt% or less.

For example, in the present embodiment, the carbon content of the steel scrap may be 0.23 wt%.

According to an embodiment of the present invention, the copper content of the direct reduced iron may be 0.02 wt% or less. The tin content of the direct reduced iron may be 0.002 wt% or less.

In an embodiment of the present invention, the copper content of the direct reduced iron may be about 0.02 wt% or less. The tin content of the direct reduced iron may be about 0.002 wt% or less.

According to an embodiment of the present invention, when the steel scrap content exceeds the preset range, the increased tramp element content may degrade the surface quality of a product.

On the other hand, when the steel scrap content is below the preset range, the effect of reducing carbon dioxide emissions may be insufficient.

Therefore, in an embodiment of the present invention, the steel scrap content may be 20 wt% to 60 wt%. According to an embodiment of the present invention, the content of steel scrap may be about 20 to 60 wt%.

In the step of charging the raw materials (S12), pig iron, direct reduced iron, and steel scrap are charged into a melting furnace. The charging of each raw material may be performed sequentially or simultaneously.

Furthermore, the charging of each raw material may be performed multiple times to prevent slag overflow or to ensure appropriate melting reactions.

The step of melting the raw materials (S13) may be performed in an electric arc furnace (EAF). In the present embodiment, the EAF may be an alternating current (AC) electric arc furnace. However, it is not limited thereto, and a direct current (DC) electric arc furnace may also be applied.

In the step of producing a semi-finished product (S20), semi-finished products such as slabs, blooms, and billets are manufactured using the molten metal produced in step (S10).

For example, step (S20) may be performed by a continuous casting process. The continuous casting process is a process in which casting and rolling are performed simultaneously by passing the molten steel through a plurality of segments arranged in series, thereby producing semi-finished products with a predetermined width and thickness.

However, step (S20) is not limited to the above-described process. For instance, step (S20) may include a forging process following the continuous casting process. Specifically, after producing blooms in the continuous casting process, it is also possible to produce forged slabs with predetermined dimensions through a subsequent forging process.

In the step of producing a hot-rolled steel sheet (S30), the semi-finished product is reheated and then rolled into a hot-rolled steel sheet with a predetermined thickness and width. For example, the thickness of the hot-rolled steel sheet may be 2 to 5 mm. However, the thickness of the hot-rolled steel sheet is not limited to this range.

Specifically, the step of producing the hot-rolled steel sheet (S30) includes a reheating step (S31), a hot rolling step (S32), a cooling step (S33), and a winding step (S34).

In the reheating step (S31), the semi-finished product is reheated within a predetermined temperature range. The reheating step (S31) may redissolve segregated elements formed in step (S20).

When the reheating temperature (RT) is below the preset temperature range, the redissolution efficiency of segregated components decreases, and the bend formability of the final product may deteriorate. On the other hand, when the reheating temperature exceeds the preset range, precipitates may become coarse, and the surface quality of the hot-rolled steel sheet may be degraded.

Therefore, the present invention limits the reheating temperature to 1150 °C to 1350 °C. In an embodiment of the present invention, the reheating temperature is limited to approximately 1150 °C to 1350 °C.

In the hot rolling step (S32), the reheated semi-finished product is hot-rolled. When the finishing delivery temperature (FDT) in step (S32) is below the preset range, issues such as mixed microstructures due to abnormal rolling may occur. On the other hand, when the FDT exceeds the preset range, the grain structure of the hot-rolled steel sheet may become coarse, causing the physical properties of the final product to be degraded.

Therefore, in the present embodiment, the FDT is limited to 880 °C to 930 °C. According to an embodiment of the present invention, the FDT is limited to approximately 880 °C to 930 °C.

In the cooling step (S33), the hot-rolled steel sheet is cooled. When the cooling rate in step (S33) is below the preset range, a ferrite microstructure may be formed instead of a bainite microstructure. On the other hand, when the cooling rate exceeds the preset range, martensite transformation may dominate over bainite transformation, deteriorating the processability of the steel sheet.

Therefore, in the present embodiment, the cooling rate is limited to 60 °C/sec to 110 °C/sec. According to an embodiment of the present invention, the cooling rate is limited to approximately 60 °C/sec to 110 °C/sec.

In the winding step (S34), the cooled hot-rolled steel sheet is wound into a coil form. When the winding temperature in step (S34) is below the preset range, winding may become difficult. On the other hand, when the winding temperature exceeds the preset range, surface scale may be formed inside the hot-rolled steel sheet.

Therefore, in the present embodiment, the winding temperature is limited to 380 °C to 480 °C. According to an embodiment of the present invention, the winding temperature is limited to approximately 380 °C to 480 °C.

As a result, according to an embodiment of the present invention, the amount of pig iron used is significantly reduced compared to a conventional blast furnace-converter process, thereby significantly reducing the amount of carbon dioxide generated during steel product production.

According to an embodiment of the present invention, it is possible to produce an electric arc furnace product with excellent physical properties by controlling the content of tramp elements to within a permissible range compared to a conventional electric arc furnace product.

According to an embodiment of the present invention, the content ratio of pig iron, direct reduced iron, and steel scrap can be adjusted within a predetermined range, thereby ensuring flexible adaptation even when supply chain disruptions occur for specific raw materials.

### Characteristics of hot-rolled steel sheet according to the present invention

Hereinafter, the examples and comparative examples of the present invention will be compared through Tables 1 to 3.

Table 1 below shows Examples 1 to 6 which are experimental examples satisfying the raw material content ranges according to the embodiments of the present invention and Comparative Examples 1 to 4 which are experimental examples deviating from these content ranges.

The carbon, copper, and tin contents in Table 1 represent the elemental compositions of the hot-rolled steel sheets of the examples and comparative examples.

The examples and comparative examples differ only in the content of the raw materials (pig iron, direct reduced iron, and steel scrap), while all other conditions (such as process parameters) are identical.

Specifically, the hot-rolled steel sheets according to the examples and comparative examples are produced through the following process.

First, according to the content ranges described in Table 1, the raw materials are charged into an electric arc furnace and melted to produce molten steel. Subsequently, a refining process may be performed to control the elemental content in the molten steel. Afterward, the molten steel is processed through a continuous casting process to manufacture semi-finished products with predetermined specifications, and these semi-finished products are then rolled using hot rolling equipment to produce hot-rolled steel sheets with a thickness of 3.2 mm.

The contents of the elements (i.e., carbon, copper, and tin) listed in Table 1 represent the results of the compositional analysis of the hot-rolled steel sheets.

**[Table 1]**

| Classification | Pig iron (wt%) | Direct reduced iron (wt%) | Steel scrap (wt%) | Carbon content (wt%) | Copper content (wt%) | Tin content (wt%) |
|---|---|---|---|---|---|---|
| Example 1 | 60 | 20 | 20 | 0.12 | 0.06 | 0.006 |
| Example 2 | 50 | 20 | 30 | 0.11 | 0.08 | 0.008 |
| Example 3 | 30 | 30 | 40 | 0.10 | 0.09 | 0.009 |
| Example 4 | 20 | 40 | 40 | 0.09 | 0.09 | 0.009 |
| Example 5 | 30 | 20 | 50 | 0.08 | 0.1 | 0.01 |
| Example 6 | 30 | 10 | 60 | 0.07 | 0.12 | 0.012 |
| Comparative Example 1 | 10 | 0 | 90 | 0.05 | 0.17 | 0.017 |
| Comparative Example 2 | 10 | 10 | 80 | 0.06 | 0.16 | 0.016 |
| Comparative Example 3 | 70 | 10 | 20 | 0.13 | 0.06 | 0.006 |
| Comparative Example 4 | 80 | 10 | 10 | 0.14 | 0.04 | 0.004 |

### [Carbon content comparison]

Referring to Table 1, the carbon content of the hot-rolled steel sheets of Examples 1 to 6 is 0.07 wt% to 0.12 wt%. The carbon content of the hot-rolled steel sheets of Comparative Examples 1 and 2 is 0.05 wt% and 0.06 wt%, respectively. The carbon content of the hot-rolled steel sheets of Comparative Examples 3 and 4 is 0.13 wt% and 0.14 wt%, respectively.

### [Tramp element comparison]

Referring to Table 1, the copper and tin contents of the hot-rolled steel sheets of Examples 1 to 6 are 0.12 wt% or less and 0.012 wt% or less, respectively.

The copper and tin contents of the hot-rolled steel sheet of Comparative Example 1 are 0.17 wt% and 0.017 wt%, respectively. The copper and tin contents of the hot-rolled steel sheet of Comparative Example 2 are 0.16 wt% and 0.016 wt%, respectively.

The copper and tin contents of the hot-rolled steel sheet of Comparative Example 3 are 0.04 wt% and 0.004 wt%, respectively. The copper and tin contents of the hot-rolled steel sheet of Comparative Example 4 are 0.03 wt% and 0.003 wt%, respectively.

In Comparative Examples 1 and 2, since steel scrap containing a higher content of tramp elements compared to pig iron and direct reduced iron was added at 80 wt% or more, the content of tramp elements was significantly higher than in Examples.

In Comparative Examples 3 and 4, since pig iron and direct reduced iron which have lower tramp element content than steel scrap was added at a total of 80 wt% or more, the content of tramp elements was lower than in Examples.

Table 2 below shows the microstructure, tensile strength, and elongation of the hot-rolled steel sheets of Examples 1 to 6 and Comparative Examples 1 to 4 listed in Table 1.

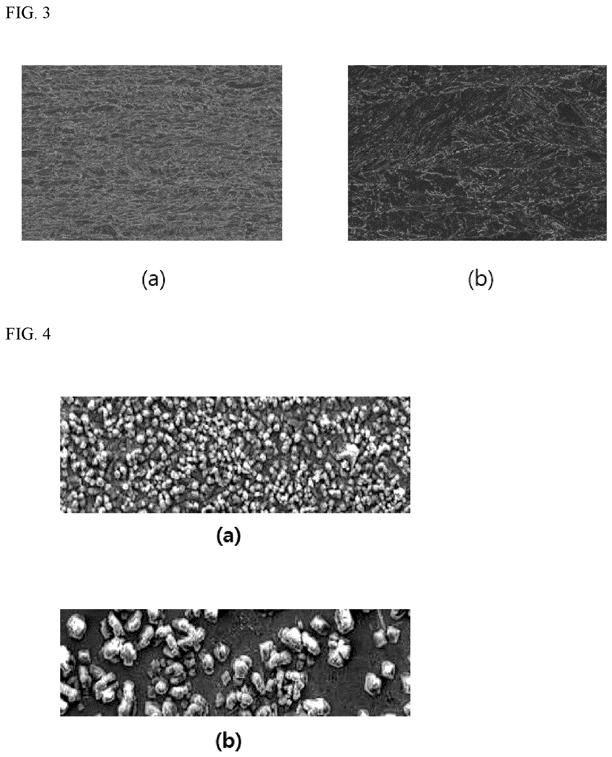

FIG. 3 shows photographs of the microstructure of the hot-rolled steel sheets according to Example 6 and Comparative Example 1 described in Table 2. FIG. 3A is a photograph of the microstructure of the hot-rolled steel sheet according to Example 6, and FIG. 3B is a photograph of the microstructure of the hot-rolled steel sheet according to Comparative Example 1.

**[Table 2]**

| Classification | Martensite % (Remainder as bainite) | Tensile strength (Mpa) | Elongation (%) |
|---|---|---|---|
| Example 1 | 15% | 1109 | 8.3 |
| Example 2 | 12% | 1078 | 8.7 |
| Example 3 | 9% | 1045 | 9.8 |
| Example 4 | 6% | 1020 | 11.8 |
| Example 5 | 2% | 997 | 12.5 |
| Example 6 | 0% | 983 | 13.1 |
| Comparative Example 1 | 0% | 912 | 10.8 |
| Comparative Example 2 | 0% | 942 | 10.2 |
| Comparative Example 3 | 18% | 1123 | 7.6 |
| Comparative Example 4 | 22% | 1133 | 7.2 |

Referring to Table 2 and FIG. 3A, the area percentage of martensite in the microstructure of the hot-rolled steel sheets according to Examples 1 to 6 is 0 % to 15 %, with the remaining area consisting of a bainite microstructure.

The hot-rolled steel sheets according to Examples 1 to 6 exhibited excellent physical properties, including a tensile strength of 980 MPa or more and an elongation of 8% or more.

The hot-rolled steel sheets of Comparative Example 1 (see FIG. 3B) and Comparative Example 2 exhibited a full bainite microstructure, which consisted of 80% upper and lower bainite and 20% granular bainite.

Consequently, the hot-rolled steel sheets of Comparative Examples 1 and 2 exhibited a tensile strength of 980 MPa or less, which was inferior to that of Examples.

In the microstructures of the hot-rolled steel sheets of Comparative Examples 3 and 4, the area percentage of martensite was 20% or more, with the remaining area consisting of a bainite microstructure.

While the hot-rolled steel sheets of Comparative Examples 3 and 4 exhibited excellent characteristics in terms of mechanical strength such as a tensile strength of 980 MPa or more, their elongation was less than 8%, resulting in inferior processability compared to Examples.

In conclusion, according to Examples of the present invention, the hot-rolled steel sheets with a carbon content of 0.07 wt% to 0.12 wt% simultaneously exhibited high strength and excellent processability.

Table 3 below shows the surface quality characteristics of hot-rolled steel sheets according to Examples 1 to 6 and Comparative Examples 1 to 4 listed in Table 1.

In Table 3, the surface quality was evaluated by applying a zinc phosphate coating to the surface of the hot-rolled steel sheets and assessing their appearance, coating weight, and crystal particle size. FIG. 4 is a set of photographs of the surfaces of hot-rolled steel sheets according to Example 6 and Comparative Example 1 described in Table 3. FIG. 4A is a surface photograph of the hot-rolled steel sheet of Example 6, and FIG. 4B is a surface photograph of the hot-rolled steel sheet of Comparative Example 1.

In the surface quality evaluation, samples were evaluated as "good" when they satisfied both the coating weight condition (1.8 to 3.0 g/m²) and the crystal particle size condition (2 to 10 µm). Samples that failed to meet either condition were evaluated as "poor."

**[Table 3]**

| Classification | Surface quality |
|---|---|
| Example 1 | Good |
| Example 2 | Good |
| Example 3 | Good |
| Example 4 | Good |
| Example 5 | Good |
| Example 6 | Good |
| Comparative Example 1 | Poor |
| Comparative Example 2 | Poor |
| Comparative Example 3 | Good |
| Comparative Example 4 | Good |

Referring to Tables 1 and 3, the copper and tin contents of the hot-rolled steel sheets of Examples 1 to 6 are 0.12 wt% or less and 0.012 wt% or less, respectively.

In Examples 1 to 6, the hot-rolled steel sheets exhibited "good" surface quality due to their low tramp element content. In contrast, Comparative Examples 1 and 2 showed "poor" surface quality due to higher tramp element content.

As a result, according to the embodiments of the present invention, it is possible to produce hot-rolled steel sheets that exhibit high strength, excellent processability, and superior surface quality by mixing pig iron, direct reduced iron, and steel scrap within predetermined content ranges.

### Automotive part according to the present invention

The automotive part according to the present invention is manufactured using the hot-rolled steel sheet of the embodiments of the present invention. For example, the automotive part may be a lower arm. However, the type of automotive part is not limited thereto, and the hot-rolled steel sheet may also be used to produce commercial vehicle frames, specialty vehicle parts, and passenger car parts.

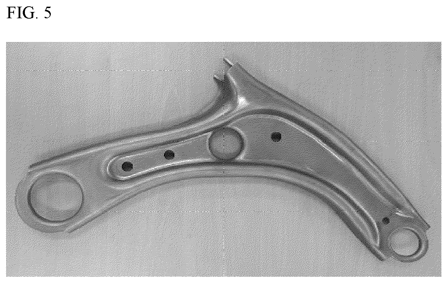

Table 4 shows the punch formability and wire processability evaluations of lower arms manufactured by processing the hot-rolled steel sheets of Examples 1 to 6 and Comparative Examples 1 to 4 listed in Table 1. FIG. 5 shows a photograph of an automotive part manufactured using the hot-rolled steel sheet according to Example 6 described in Table 4.

**[Table 4]**

| Classification | Punch formability evaluation | Wire processability evaluation |
|---|---|---|
| Example 1 | Good | Good |
| Example 2 | Good | Good |
| Example 3 | Good | Good |
| Example 4 | Good | Good |
| Example 5 | Good | Good |
| Example 6 | Good | Good |
| Comparative Example 1 | Poor | Poor |
| Comparative Example 2 | Poor | Poor |
| Comparative Example 3 | Good | Good |
| Comparative Example 4 | Good | Good |

As shown in Table 4 and FIG. 6, the lower arms of Examples 1 to 6 and Comparative Examples 3 and 4 exhibited "good" performance in both punch formability and wire processability evaluations. However, the lower arms of Comparative Examples 1 and 2 showed "poor" performance in these evaluations.

The reason for this is considered to be that the contents of copper and tin in the hot-rolled steel sheets exceeded 0.13 and 0.013, respectively, thereby deteriorating the processability of the parts.

According to an embodiment of the present invention, it is possible to significantly reduce the amount of carbon dioxide generated during steel product production by remarkably reducing the amount of pig iron used compared to a conventional blast furnace-converter process.

According to an embodiment of the present invention, it is possible to produce an electric arc furnace product with excellent physical properties by controlling the content of tramp elements to within a permissible range compared to a conventional electric arc furnace product.

According to an embodiment of the present invention, the content ratios of pig iron, direct reduced iron, and steel scrap can be adjusted within a predetermined range, thereby ensuring flexible adaptation even when supply chain disruptions occur for specific raw materials.

As described above, preferred embodiments of the present invention have been described, and it is apparent to those skilled in the art that the present invention may be embodied in other specific forms without departing from the spirit or scope of the present invention, in addition to the embodiments described above.

In other words, the above-described embodiments should be considered as illustrative rather than restrictive, and accordingly, the present invention is not limited to the above description and may be modified within the scope of the appended claims and their equivalents.

## Claims

1. A method of producing a hot-rolled steel sheet, comprising:
producing molten metal using raw materials including pig iron produced in a blast furnace, direct reduced iron, and steel scrap;
producing a semi-finished product; and
producing a hot-rolled steel sheet,
wherein the cross-sectional microstructure of the hot-rolled steel sheet includes 15% or less of a martensite microstructure and the remainder as a bainite microstructure.

2. The method of claim 1, wherein the step of producing a hot-rolled steel sheet includes:
reheating at a reheating temperature of 1150 °C to 1350 °C;
hot rolling at a finishing delivery temperature of 880 °C to 930 °C;
cooling at a cooling rate of 60 °C/sec to 110 °C/sec; and
winding at a winding temperature of 380 °C to 480 °C.

3. The method of claim 1, wherein a content of the pig iron is 20 wt% to 60 wt%.

4. The method of claim 1, wherein a content of the direct reduced iron is 10 wt% to 40 wt%.

5. The method of claim 1, wherein a content of the steel scrap is 20 wt% to 60 wt%.

6. The method of claim 1, wherein the hot-rolled steel sheet includes 0.07 wt% to 0.12 wt% of carbon.

7. The method of claim 1, wherein the step of producing molten metal includes:
charging the raw materials into an electric arc furnace; and
melting the raw materials in the electric arc furnace.

8. A hot-rolled steel sheet comprising, in % by weight, 0.07 to 0.12% of carbon, 0.3 to 0.8% of silicon, 1.5 to 2.0% of manganese, 0.02% or less of phosphorus, 0.005% or less of sulfur, 0.12% or less (excluding 0) of copper, 0.012% or less (excluding 0) of tin, and the remainder as iron (Fe) and unavoidable impurities,
wherein the hot-rolled steel sheet is produced by melting pig iron produced in a blast furnace, direct reduced iron, and steel scrap, and
the cross-sectional microstructure of the hot-rolled steel sheet includes 15% or less of a martensite microstructure and the remainder as a bainite microstructure.

9. A hot-rolled steel sheet comprising of claim 8, wherein a content of the pig iron is 20 wt% to 60 wt%.

10. A hot-rolled steel sheet comprising of claim 8, wherein a content of the direct reduced iron is 10 wt% to 40 wt%.

11. A hot-rolled steel sheet comprising of claim 8, wherein a content of the steel scrap is 20 wt% to 60 wt%.

12. The hot-rolled steel sheet of claim 8, which satisfies a coating weight of 1.8 to 3.0 g/m² and a crystal particle size of 2 to 10 µm when observing the surface after phosphate coating treatment.

13. The hot-rolled steel sheet of claim 10, further comprising one or more elements of chromium (Cr), niobium (Nb), titanium (Ti), and boron (B).

14. An automotive part comprising, in % by weight, 0.07 to 0.12% of carbon, 0.3 to 0.8% of silicon, 1.5 to 2.0% of manganese, 0.02% or less of phosphorus, 0.005% or less of sulfur, 0.12% or less (excluding 0) of copper, 0.012% or less (excluding 0) of tin, and the remainder as iron (Fe) and unavoidable impurities,
wherein a base material of the automotive part is produced by melting pig iron produced in a blast furnace, direct reduced iron, and steel scrap, and
the cross-sectional microstructure of the base material includes 15% or less of a martensite microstructure and the remainder as a bainite microstructure.

15. The automotive part of claim 14, wherein a content of the pig iron is 20 wt% to 60 wt%, a content of the direct reduced iron is 10 wt% to 40 wt%, and a content of the steel scrap is 20 wt% to 60 wt%.

16. The automotive part of claim 14, which satisfies a coating weight of 1.8 to 3.0 g/m² and a crystal particle size of 2 to 10 µm when observing the surface after phosphate coating treatment.

17. The automotive part of claim 14, further comprising one or more elements of chromium (Cr), niobium (Nb), titanium (Ti), and boron (B).
